(19) Europäisches Patentamt

European Patent Office

Office européen des brevets

(11) Publication number: **0 243 761 B1**

# EUROPEAN PATENT SPECIFICATION

(45) Date of publication of patent specification: **17.08.94** (51) Int. Cl.⁵: **C08L 71/12**, C08K 5/51, C08K 5/52, //(C08L71/12,25:04)

(21) Application number: **87105334.4**

(22) Date of filing: **10.04.87**

(54) **Phenylene ether compositions having improved color stability.**

(30) Priority: **21.04.86 US 854024**

(43) Date of publication of application:
**04.11.87 Bulletin 87/45**

(45) Publication of the grant of the patent:
**17.08.94 Bulletin 94/33**

(84) Designated Contracting States:
**DE FR GB IT NL**

(56) References cited:
**EP-A- 0 038 183**
**US-A- 4 405 739**
**US-A- 4 489 186**

(73) Proprietor: **GE SPECIALTY CHEMICALS, INC.**
**Parkersburg Center**
**5th & Avery Streets**
**Parkersburg, West Virginia 26102 (US)**

(72) Inventor: **Warren, Renate Ingrid**
**Rt. 1, Box 38A**
**Coolville Ohio 45723 (US)**
Inventor: **Place, Ronald H.**
**Rt. No. 1, Box 536**
**Vincent Ohio 45784 (US)**

(74) Representative: **VOSSIUS & PARTNER**
**Postfach 86 07 67**
**D-81634 München (DE)**

**Description**

The present invention relates to phenylene ether compositions having improved color stability, and to blends of phenylene ether copolymer (PEC) resins and high impact polystyrene (HIPS) resins in particular.

Phenylene ether resins have long been known as high temperature thermoplastics. These resins are typically prepared by the oxidative coupling of a monohydric phenol such as 2,6-dimethyl phenol. This reaction may be used to synthesize polyphenylene ether homopolymer resins and phenylene ether copolymer resins, such as copolymers of 2,6-dialkyl phenols and 2,3,6-trialkyl phenols. Although these resins have improved thermal resistance, high temperature oxidative stability and resistance to heat aging, these resins may experience a shift in color upon melt processing and exposure to ultraviolet (UV) radiation which may make the resin unacceptable for the intended application.

A variety of ultraviolet light stabilizers are known in the art, and may include benzophenones, benzotriazoles, organic nickel compounds, and various hindered amines. However, the performance of UV stabilizers may differ depending upon the resin in which they are used and the presence of other components. Although stabilizers are known for phenylene ether resins, these stabilizers may prove inadequate for many compositions, such as flame retardant phenylene ether resins. Therefore phenylene ether based resin compositions with improved color stability offer significant practical advantages over many compositions known in the art.

The present invention is a thermoplastic composition which comprises a triaryl phosphate, an alkyl aryl phosphite, and a resin component which includes a phenylene ether polymer wherein the triaryl phosphate is present in an amount equal to 10 to 30 parts by weight and the alkyl aryl phosphite is present in an amount equal to 0.3 to 6 parts by weight, based on 100 parts by weight of the resin component, or when the thermoplastic composition comprises more than 1 part by weight octyl diphenyl phosphite as the alkyl aryl phosphite, the triaryl phosphate is present in an amount equal to 5 to 30 parts by weight, the parts by weight again based on 100 parts by weight of the resin component. Preferably, the triaryl phosphate is triphenyl phosphate and the alkyl aryl phosphite is octyl diphenyl phosphite.

The present invention is a thermoplastic composition which comprises a triaryl phosphate, an alkyl aryl phosphite and a resin component which includes a phenylene ether polymer.

The phenylene ether resin useful for the present invention generally is a polymer of a 2,6-dialkyl phenol, such as 2,6-dimethyl phenol, and copolymers thereof with a 2,3,6-trialkyl phenol, such as 2,3,6-trimethyl phenol. When the phenylene ether polymer is a copolymer, the proportion of 2,3,6-trialkyl phenol will usually be about 2 to about 50% by weight, based on the total weight of the phenylene ether copolymer. However, the preferred copolymers are those comprising about 2 to about 20, and more preferably about 2 to about 10 wt% 2,3,6-trialkyl phenol and, correspondingly, from about 98 to about 80, and more preferably about 98 to about 90 wt% 2,6-dialkyl phenol. The synthesis of such resins from the corresponding phenols by an oxidative coupling process is well known in the art, and is exemplified in US-A-4,011,200. Although the phenylene ether polymer useful in the composition of the present invention may be a phenylene ether homopolymer, phenylene ether copolymers are preferred.

In the preferred embodiment of the present invention, the resin component additionally includes a vinyl aromatic resin, such as homopolymers of sytrene, vinyl toluene, chlorostyrene, bromostyrene, and copolymers thereof, as well as impact modified versions of the various styrenic resins which typically include graft copolymers of said monomers on rubbery substrates, block copolymers of polystyrene and elastomeric diene blocks and blends of said homopolymers or copolymers with rubbery impact modifiers. High impact polystyrene resins and blends of high impact polystyrene resins with other styrenic resins are most preferred. Styrenic resins useful in the invention are available commercially, or may be synthesized by means well known in the art. For example, blends of polyphenylene ether homopolymers and copolymer resins with styrenic resins are available commercially as Noryl resins sold by the General Electric Company, and Prevex resins sold by Borg-Warner Chemicals, Inc. Vinyl aromatic resins are preferably present in amounts equal to 20 to 70 parts by weight, based on 100 parts by weight of the resin component, and more preferably 30 to 60 parts by weight.

As with these commercially available blends, the phenylene ether resins and blends of phenylene ether resins with vinyl aromatic resins may be formulated to include plasticizers, pigments, flame retardants, lubricants, stabilizers and the like, such as polyolefins, phenolic stabilizers, and so forth.

It is critical to the present invention that the thermoplastic composition include both a triaryl phosphate and an alkyl aryl phosphite. A variety of triaryl phosphates are known in the art, and include compounds such as triphenyl phosphate, t-butylphenyl diphenyl phosphate, cresyl diphenyl phosphate, isopropylphenyl diphenyl phosphate, tricresyl phosphate and trixylenyl phosphate. However, triphenyl phosphate is preferred. Amounts of triaryl phosphate of about 10 to about 20 parts by weight are preferred.

2

Similarly, alkyl aryl phosphites include compounds such as decyl diphenyl phosphite, octyl diphenyl phosphite, didecyl phenyl phosphite, neopentyl nonylphenyl phosphite, and neopentyl phenyl phosphite. However, octyl diphenyl phosphite is preferred.

It is preferred that the alkyl aryl phosphite be present in amounts more than 1 part by weight based on 100 parts by weight of the resin component. Amounts of the alkyl aryl phosphite equal to about 1.5 to about 3 parts by weight are more preferred, with amounts of about 2 to about 2.5 parts by weight being particularly preferred.

The present invention may be further understood by reference to the following non-limiting, illustrative examples described below.

Compositions consistent with various embodiments of the invention, wherein the composition includes a triaryl phosphate, an alkyl aryl phosphite and a phenylene ether polymer, were tested to assess their color stability when exposed to UV radiation. Other compositions which included a phenylene ether polymer, but did not include both a triaryl phosphate and an alkyl aryl phosphite, were also tested to provide a basis for comparison.

Samples were tested by exposure to UV radiation from a carbon arc lamp for 125 fadeometer hours (SFH), or by exposure to UV radiation from a xenon arc lamp for 100 xenon fadeometer hours (XFH), or by HPUV exposure at 38% (HPUV 38%), and the change in color or "Delta E" noted.

The components of the compositions tested, their proportions in parts by weight (pbw) and the results of testing are indicated below in Tables I - VI. All compositions included 0.6 pbw of a hindered phenolic antioxidant and 0.5 pbw of a lubricant. In these tables "PEC" denotes a phenylene ether copolymer of approximately 95% 2,6-dimethyl phenol and approximately 5% 2,3,6-trimethyl phenol. "HIPS" denotes high impact polystyrene; and "TPPA" denotes triphenyl phosphate. "IM" denotes rubbery impact modifier; "TNPP" denotes tris-nonylphenyl phosphite; "ODPP" denotes octyl diphenyl phosphite; and "UV 180" denotes Noryl⁻ UV 180, a phenylene ether polymer/styrenic polymer blend available from the General Electric Co. "Cyasorb UV 531" denotes 2-hydroxy-4-n-octoxybenzophenone obtained from American Cyanamid; "Irganox MD1024" denotes a phenolic antioxidant available from Ciba-Geigy; "$Et_2NOH$" denotes N, N-diethyl hydroxylamine; "Tinuvin P" denotes 2-(2'-hydroxy-5'-methylphenyl) benzotriazole; "Tinuvin 328" denotes 2-(2'-hydroxy-3,5'-di-tamylphenyl) benzotriazole; "Goodrite 3114" denotes an antioxidant available under that designation from the B. F. Goodrich Company; and "UV 5411" denotes 2⁻(2'-hydroxy-5-t-octylphenyl) benzotriazole. In addition, the compositions represented in Examples 1-14 and 19-25 contained minor amounts of pigment sufficient to cause the test specimens to be of a uniform color.

Referring to Table I, Comparative Examples 1 and 3 include tris-nonylphenyl phosphite, instead of the alkyl aryl phosphite as in the present invention. Examples 2 and 4-6 represent various embodiments of the invention, wherein the thermoplastic composition includes a phenylene ether polymer, a triaryl phosphate and an alkyl aryl phosphite. Comparative Example 5 does not contain the triaryl phosphate required according to the present invention.

Similarly, Examples 2, 4 and 7-14 represented in Table II are consistent with various embodiments of the invention, with the alkyl aryl phosphite being present in various proportions in relation to the other components.

Examples 15-16 in Table III are consistent with several different embodiments of the invention. However, unlike the present invention, a triaryl phosphate was not present in the composition tested for Comparative Example 17. Similarly, Comparative Example 18 does not embody the invention, but provides a basis for comparing the present invention with ABS or a commercially available phenylene ether polymer composition.

In Table IV, Comparative Examples 19, 21, 22, 24 and 26 represent compositions not embodying the invention, while the compositions of Examples 20, 23 and 25 are consistent with various embodiments of the invention. In the compositions of Comparative Examples 19, 21 and 22, tris-nonylphenyl phosphite was present instead of an alkyl aryl phosphite. In the composition of Comparative Example 24, the alkyl aryl phosphite was omitted, without being replaced by another compound. Comparative Example 26 represents a commercially available phenylene ether composition believed not to embody the invention.

Examples 45(A-C) - 49(A-C) in Table V represent testing of differently colored compositions consistent with the invention. Each of these compositions was composed of 38.0 parts PEC, 60.8 parts HIPS, 1.2 parts IM, 15.0 parts TPPA, and pigments. ODPP was also included in the parts by weight indicated for each specific example. In addition, a standard was provided by testing a composition of the same color which contained the same components, except that 0.4 parts TNPP had been substituted for ODPP.

3

# T A B L E   I

## COLOR   MATCHED

| EXAMPLE | 1 | 2 | 3 | 4 | 5 | 6 |
|---|---|---|---|---|---|---|
| Component | | | | pbw | | |
| PEC | 38.0 | 38.0 | 38.0 | 38.0 | 38.0 | 38.0 |
| HIPS | 60.8 | 60.8 | 60.8 | 60.8 | 60.8 | 60.8 |
| TPPA | 15.0 | 15.0 | 15.0 | 15.0 | - | 15.0 |
| IM | 1.2 | 1.2 | 1.2 | 1.2 | 1.2 | 1.2 |
| TNPP | 0.4 | - | 2.0 | - | - | - |
| ODPP | - | 0.4 | - | 2.0 | 2.0 | 2.0 |
| Phenylphosphinic Acid | - | - | - | - | - | 0.5 |
| DELTA E | | | | | | |
| after 125 SFH (carbon arc) | 8.81 | 8.81 | 8.31 | 5.87 | 9.26 | 7.30 |
| after 100 XFH (xenon arc) | 9.18 | 8.69 | 8.98 | 8.84 | 8.72 | 9.60 |

EP 0 243 761 B1

## T A B L E   II

### COLOR   MATCHED

| EXAMPLE | 2 | 7 | 8 | 9 | 4 | 10 | 11 | 12 | 13 | 14 |
|---|---|---|---|---|---|---|---|---|---|---|
| **Component** | | | | | pbw | | | | | |
| PEC | 38.0 | 38.0 | 38.0 | 38.0 | 38.0 | 38.0 | 38.0 | 38.0 | 38.0 | 38.0 |
| HIPS | 60.8 | 60.8 | 60.8 | 60.8 | 60.8 | 60.8 | 60.8 | 60.8 | 60.8 | 60.8 |
| TPPA | 15.0 | 15.0 | 15.0 | 15.0 | 15.0 | 15.0 | 15.0 | 15.0 | 15.0 | 15.0 |
| IM | 1.2 | 1.2 | 1.2 | 1.2 | 1.2 | 1.2 | 1.2 | 1.2 | 1.2 | 1.2 |
| TNPP | - | - | - | - | - | - | - | - | - | - |
| ODPP | 0.4 | 1.0 | 1.0 | 1.5 | 2.0 | 2.0 | 2.5 | 3.0 | 4.0 | 5.0 |
| **DELTA   E** | | | | | | | | | | |
| after 125 SFH (carbon arc) | 8.81 | 8.64 | 6.09 | 6.15 | 5.87 | 3.22 | 5.73 | 6.16 | 5.41 | 6.67 |
| after 100 XFH (xenon arc) | 8.69 | 9.00 | 8.59 | 8.00 | 8.84 | 8.36 | 8.20 | 8.24 | 8.85 | 8.87 |

EP 0 243 761 B1

EP 0 243 761 B1

T A B L E   III

NOT   COLOR   MATCHED

| Example | 15 | 16 | 17 | 18 |
|---|---|---|---|---|
| Component | | | pbw | |
| PEC | 70.0 | 38.0 | 38.0 | — |
| HIPS | 28.8 | 60.8 | 60.8 | — |
| TPPA | 15.0 | 15.0 | — | — |
| IM | 1.2 | 1.2 | 1.2 | — |
| ODPP | 2.0 | 2.0 | 2.0 | — |
| UV 180 | — | — | — | 100 |
| DELTA  E | | | | |
| after 125 SFH (carbon arc) | 16.80 | 4.90 | 7.91 | 9.47 |
| after 100 XFH (xenon arc) | 14.51 | 4.65 | 3.01 | 8.00 |

EP 0 243 761 B1

### T A B L E   IV

COLOR   MATCHED
(EXCEPT EX. 29)

| EXAMPLE | 19 | 20 | 21 | 22 | 23 | 24 | 25 | 26 |
|---|---|---|---|---|---|---|---|---|
| __Component__ | | | | __pbw__ | | | | |
| PEC | 30.0 | 30.0 | 38.0 | 38.0 | 38.0 | 38.0 | 38.0 | – |
| HIPS | 70.0 | 70.0 | 60.8 | 60.8 | 60.8 | 60.8 | 60.8 | – |
| TPPA | 12.0 | 12.0 | 15.0 | 15.0 | 15.0 | 15.0 | 15.0 | – |
| IM | 3.0 | 3.0 | 1.2 | 1.2 | 1.2 | 1.2 | 1.2 | – |
| TNPP | 0.4 | – | 0.4 | 0.4 | – | – | – | – |
| ODPP | – | 0.4 | – | – | 0.4 | – | 0.4 | – |
| Cyasorb UV 531 | – | – | – | 2.0 | 2.0 | – | – | – |
| Irganox MD-1024 | – | – | – | – | – | – | – | – |
| Et$_2$NOH | – | – | – | – | – | 0.5 | 0.5 | – |
| Tinuvin P | – | – | – | – | – | 1.0 | 1.0 | – |
| Goodrite 3114 | – | – | – | – | – | 0.5 | 0.5 | – |
| UV 180 | – | – | – | – | – | – | – | 100 |
| __DELTA   E__ | | | | | | | | |
| after 125 SFH (carbon arc) | 7.06 | 4.99 | 10.07 | 8.67 | 5.92 | 7.94 | 6.14 | 4.79 |
| after 100 XFH (xenon arc) | 7.70 | 6.98 | 8.23 | 7.21 | 6.65 | 6.15 | 6.91 | 6.49 |

TABLE V

| EXAMPLE | | COLOR | ODPP (pbw) | 125 SFH | SFH STD | 125 XFH | XFH STD | HPUV 38% | HPUV STD |
|---|---|---|---|---|---|---|---|---|---|
| 45 | A | Lt. Gray | 2.0 | 6.57 | | 11.74 | | 3.68 | |
| | B | " | 3.5 | 4.86 | 9.62 | 10.12 | 11.57 | 3.06 | 4.72 |
| | C | " | 5.0 | 4.53 | | 11.22 | | 3.02 | |
| 46 | A | Med. Gray | 2.0 | 2.18 | | 7.09 | | 2.03 | |
| | B | " | 3.5 | 2.48 | 3.98 | 7.20 | 7.89 | 2.22 | 2.60 |
| | C | " | 5.0 | 2.95 | | 9.05 | | 2.30 | |
| 47 | A | Dark Gray | 2.0 | 0.50 | | 0.38 | | 0.50 | |
| | B | " | 3.5 | 0.18 | 0.61 | 0.56 | 1.48 | 0.23 | 0.58 |
| | C | " | 5.0 | 0.60 | | 1.67 | | 0.71 | |
| 48 | A | Natural | 2.0 | 6.14 | | 13.21 | | 4.31 | |
| | B | " | 3.5 | 6.02 | 8.70 | 13.19 | 14.58 | 4.77 | 6.05 |
| | C | " | 5.0 | 5.67 | | 13.91 | | 4.87 | |
| 49 | A | Beige | 2.0 | 4.38 | | 10.78 | | 3.96 | |
| | B | " | 3.5 | 3.89 | 6.88 | 9.78 | 10.93 | 3.93 | 4.94 |
| | C | " | 5.0 | 3.02 | | 11.07 | | 3.98 | |

## Claims

1. A thermoplastic composition comprising a triaryl phosphate in an amount equal to 10 to 30 parts by weight, based on 100 parts by weight resin component, an alkyl aryl phosphite in an amount equal to 0.3 to 6 parts by weight, based on 100 parts by weight resin component, and a resin component which

8

includes a phenylene ether polymer, or, where the thermoplastic composition comprises more than 1 part by weight of octyl diphenyl phosphite, the triaryl phosphate is present in an amount equal to 5 to 30 parts by weight, based on 100 parts by weight resin component.

2. The composition of claim 1 wherein said resin is a phenylene ether copolymer.

3. The composition of claim 1 wherein said resin component additionally includes a vinyl aromatic resin.

4. The composition of claim 3 wherein said vinyl aromatic resin is a rubber modified polystyrene.

5. The composition of claim 3 wherein said vinyl aromatic resin is present in an amount equal to 20 to 70 parts by weight based on 100 parts by weight resin component.

6. The composition of claim 5 where said vinyl aromatic resin is present in an amount equal to 30 to 60 parts by weight based on 100 parts by weight resin component.

7. The composition of claim 1 wherein said alkyl diaryl phosphite is octyl diphenyl phosphite.

8. The composition of claims 1 or 7 wherein said triaryl phosphate is triphenyl phosphate.

**Patentansprüche**

1. Thermoplastische Masse, umfassend ein Triarylphosphat in einer Menge von 10 bis 30 Gewichtsteilen, bezogen auf 100 Gewichtsteile der Harzkomponente, ein Alkylarylphosphit in einer Menge von 0,3 bis 6 Gewichtsteilen, bezogen auf 100 Gewichtsteile der Harzkomponente, und eine Harzkomponente, welche ein Phenylenetherpolymer einschließt, oder das Triarylphosphat in einer Menge von 5 bis 30 Gewichtsteilen, bezogen auf 100 Gewichtsteile der Harzkomponente, wenn die thermoplastische Masse mehr als 1 Gewichtsteil Octyldiphenylphosphit umfaßt.

2. Masse nach Anspruch 1, in der das Harz ein Phenylenethercopolymer ist.

3. Masse nach Anspruch 1, in der die Harzkomponente zusätzlich ein vinylaromatisches Harz einschließt.

4. Masse nach Anspruch 3, in der das vinylaromatische Harz ein kautschukmodifiziertes Polystyrol ist.

5. Masse nach Anspruch 3, in der das vinylaromatische Harz in einer Menge von 20 bis 70 Gewichtsteilen, bezogen auf 100 Gewichtsteile der Harzkomponente, vorhanden ist.

6. Masse nach Anspruch 5, in der das vinylaromatische Harz in einer Menge von 30 bis 60 Gewichtsteilen, bezogen auf 100 Gewichtsteile der Harzkomponente, vorhanden ist.

7. Masse nach Anspruch 1, in der das Alkyldiarylphosphit Octyldiphenylphosphit ist.

8. Masse nach Anspruch 1 oder 7, in der das Triarylphosphat Triphenylphosphat ist.

**Revendications**

1. Composition thermoplastique comprenant un phosphate de triaryle en une quantité valant de 10 à 30 parties en poids pour 100 parties en poids de composant de type résine, un phosphite d'alkyle et d'aryle en une quantité valant de 0,3 à 6 parties en poids pour 100 parties en poids de composant de type résine, et un composant de type résine qui comprend un poly(phénylène éther), ou bien, quand la composition thermoplastique comprend plus de 1 partie en poids de phosphite d'octyle et de diphényle, le phosphate de triaryle s'y trouve en une quantité valant de 5 à 30 parties en poids pour 100 parties en poids de composant de type résine.

2. Composition conforme à la revendication 1, dans laquelle ladite résine est un copolymère d'éther de phénylène.

3. Composition conforme à la revendication 1, dans laquelle ledit composant de type résine comprend en outre une résine vinyl-aromatique.

4. Composition conforme à la revendication 3, dans laquelle ladite résine vinyl-aromatique est un polystyrène modifié par un caoutchouc.

5. Composition conforme à la revendication 3, dans laquelle ladite résine vinyl-aromatique se trouve en une qualité valant de 20 à 70 parties en poids pour 100 parties en poids de composant de type résine.

6. Composition conforme à la revendication 5, dans laquelle ladite résine vinyl-aromatique se trouve en une quantité valant de 30 à 60 parties en poids pour 100 parties en poids de composant de type résine.

7. Composition conforme à la revendication 1, dans laquelle ledit phosphite d'alkyle et de diaryle est du phosphite d'octyle et de diphényle.

8. Composition conforme à la revendication 1 ou 7, dans laquelle ledit phosphate de triaryle est du phosphate de triphényle.